# EUROPÄISCHE PATENTANMELDUNG

(11) **EP 1 041 354 A2**
(43) Veröffentlichungstag der Anmeldung: **04.10.2000**
(21) Anmeldenummer: 00105495.6
(22) Anmeldetag: 15.03.2000
(51) Int. Cl.: F28C 3/08, F25D 3/10, F17C 13/10, A23L 3/3409

(54) **Beheizbare Eintragsvorrichtung für kryogene Medien**

(30) Priorität: 30.03.1999 DE 19914483
(71) Anmelder: Linde Technische Gase GmbH, 82049 Höllriegelskreuth (DE)
(72) Erfinder: Garnreiter, Franz, Dipl.-Ing.(FH), 83052 Bruckmühl (DE); Grupa, Uwe, Dr.-Ing., 85356 Freising (DE)
(74) Vertreter: Kasseckert, Rainer

(57) **Zusammenfassung**

Beim Eintragen von kryogenen Medien, z.B. flüssigem Stickstoff, in dispergierbare Stoffe, z.B. flüssige Lebensmittel, kann es zu Störungen aufgrund von Anfrierungen an der Eintragsvorrichtung kommen. Um solche Störungen zu verhindern, wird vorgeschlagen, die mit den dispergierbaren Stoffen in Berührung kommenden Teile der Eintragsvorrichtung zu beheizen.

## Beschreibung

Die Erfindung betrifft ein Verfahren zum Eintragen eines kryogenen Mediums in dispergierbare Stoffe mittels einer Eintragsvorrichtung, die zumindest teilweise mit den dispergierbaren Stoffen in Berührung gebracht wird, sowie eine Vorrichtung zur Durchführung des Verfahrens.

In vielen Bereichen der Verfahrenstechnik ist es notwendig, ein kryogenes Medium in dispergierbare Stoffe, z.B. in ein fließfähiges Produkt oder in Pulver, einzubringen, um bestimmte Wirkungen in den Stoffen zu erzielen. Insbesondere ist es in der Lebensmitteltechnik bekannt, dispergierbare Stoffe, z.B. heiße Soßen, durch den Eintrag eines kryogenen Mediums, z.B. flüssigen Stickstoff, auf eine gewünschte Temperatur abzukühlen. Dabei werden die dispergierbaren Stoffe üblicherweise in einen Rührkessel eingegeben und unter fortlaufendem Rühren mittels eines Mischaggregates durch Zugabe des kryogenen Mediums schnell auf eine vorbestimmte Temperatur abgekühlt. Zum Einbringen des kryogenen Mediums in die dispergierbaren Stoffe sind meist Injektoren vorgesehen, die in die dispergierbaren Stoffe eingetaucht werden. Beim Eintrag des kryogenen Mediums mittels derartiger Eintragsvorrichtungen besteht die Gefahr, daß Stoffe an der Eintragsvorrichtung anfrieren. Dies kann unter Umständen dazu führen, daß sich die Anfrierungen an der Eintragsvorrichtung mit dem Mischaggregat so verhaken, daß der Deckel des Rührkessels nicht mehr vollständig geöffnet werden kann. Außerdem behindern die gefrorenen Produktteile das sofortige Weiterverarbeiten der Stoffe.

Der vorliegenden Erfindung liegt daher die Aufgabe zugrunde, ein Verfahren der eingangs genannten Art sowie eine Vorrichtung zur Durchführung des Verfahrens so auszugestalten, daß die geschilderten Störungen vermieden werden.

Diese Aufgabe wird erfindungsgemäß verfahrensseitig dadurch gelöst, daß die mit den dispergierbaren Stoffen in Berührung stehenden Teile der Eintragsvorrichtung zumindest teilweise und zumindest zeitweise beheizt werden.

Durch diese Beheizung wird die durch das kryogene Medium aus dem Material der Eintragsvorrichtung per Wärmeleitung entzogene Wärme ersetzt so daß das Anfrieren von Stoffen an der Eintragsvorrichtung zuverlässig verhindert wird.

Gemäß einer besonders zweckmäßigen Ausführungsform der Erfindung wird die Eintragsvorrichtung zumindest teilweise in die dispergierbaren Stoffe eingetaucht, wobei die eingetauchten Teile zumindest teilweise und zumindest zeitweise beheizt werden. Je nach der konkreten Ausgestaltung der Eintragsvorrichtung ist es ggf. nicht notwendig, den gesamten in die dispergierbaren Stoffe eingetauchten Abschnitt der Eintragsvorrichtung zu beheizen, sondem nur ausgewählte Teile davon. Welche Teile beheizt werden und wie lange die Beheizung anhält, hängt von der konstruktiven Gestaltung und der Wärmeleitfähigkeit des verwendeten Materials ab. Die beheizten Teile werden so ausgewählt und die Zeitdauer der Beheizung wird so eingestellt, daß aufgrund der Wärmeeinleitung infolge der Beheizung ein Anfrieren von Stoffen an der Eintragsvorrichtung zuverlässig verhindert wird. Dabei werden vorzugsweise die nicht vom kryogenen Medium durchströmten Teile der Eintragsvorrichtung zumindest teilweise beheizt.

Als kryogenes Medium kommen alle Medien in Frage, die die gewünschte Auswirkung auf die dispergierbaren Stoffe erreichen können. Insbesondere zum Abkühlen der dispergierbaren Stoffe eignet sich flüssiger Stickstoff ganz besonders gut.

Das erfindungsgemäße Verfahren kann zum Eintragen von kryogenen Medien in alle denkbaren dispergierbaren Stoffe eingesetzt werden. Mit besonderem Vorteil kann die Erfindung zum Abkühlen von dispergierbaren Stoffen, insbesondere fließfähigen Produkten, z.B. flüssigen Lebensmitteln, auf eine vorbestimmte Temperatur verwendet werden. Um den Abkühlvorgang zu beschleunigen ist es empfehlenswert, die dispergierbaren Stoffe während des Abkühlens zu mischen. Die Erfindung eignet sich allgemein für Anwendungen in der Verfahrenstechnik. Neben der Lebensmitteltechnik kann die Erfindung z.B. auch in der Chemie und in der Pharmazie zum Einsatz kommen.

Zur Durchführung des Verfahrens ist eine Eintragsvorrichtung vorgesehen, die zumindest teilweise mit den dispergierbaren Stoffen in Berührung zu bringen ist.

Vorrichtungsseitig wird die gestellte Aufgabe erfindungsgemäß dadurch gelöst, daß die mit den dispergierbaren Stoffen in Berührung zu bringenden Teile der Eintragsvorrichtung zumindest teilweise mit einer Heizeinrichtung in Wirkverbindung stehen. Vorzugsweise handelt es sich dabei um die Teile der Eintragsvorrichtung, die nicht vom kryogenen Medium durchströmt werden.

In der Praxis ist die Eintragsvorrichtung bevorzugt als Injektor ausgebildet der in die dispergierbaren Stoffe eintauchbar ist Dabei sind die eintauchbaren und vom kryogenen Medium nicht durchströmten Teile des Injektors mit einer Beheizung ausgestattet.

Gemäß einer Weiterbildung des Erfindungsgedankens sind zumindest Teile der Eintragsvorrichtung wärmeisoliert ausgebildet.

Mit der Erfindung wird ein ungehinderter Eintrag des kryogenen Mediums in die dispergierbaren Stoffe erreicht, da ein Anfrieren von Stoffen an der Eintragsvorrichtung verhindert wird. Darüber hinaus hat die Erfindung positive Auswirkungen auf die Qualität des Produkts, da die Produktzusammensetzung nicht durch ausfrierendes Wasser verschoben wird. Außerdem wird das Mischen der dispergierbaren Stoffe erleichtert, da keine störenden Eisklumpen entstehen können. Wird ein tiefkaltes, verflüssigtes kryogenes Medium, z.B. flüssiger Stickstoff, eingesetzt, so wirkt sich das beim Verdampfen des kryogenen Mediums sich bildende Gas während der Durchmischung der dispergierbaren Stoffe strömungsbrechend aus und sorgt auch bei langsam drehenden Mischaggregaten für eine gute Durchmischung der Stoffe. Schließlich wird eine Behinderung der Mischaggregate aufgrund der Bildung von Eisklumpen zuverlässig verhindert.

Im folgenden soll die Erfindung anhand eines Ausführungsbeispiels näher erläutert werden:

Im vorliegenden Ausführungsbeispiel soll die Erfindung in der Lebensmitteltechnik eingesetzt werden. Bei der Herstellung von Fertigprodukten stellt sich häufig das Problem, daß eine heiße Soße schnell auf eine bestimmte Temperatur abgekühlt werden muß. Hierzu wird die Soße in einen Rührkessel gegeben und unter fortlaufendem Mischen mittels eines Rührwerks und Zugabe von flüssigem Stickstoff gekühlt. Zur Zugabe des flüssigen Stickstoffs ist ein Injektor vorgesehen, der im wesentlichen aus einem Eintragsrohr besteht. Das Eintragsrohr taucht in die im Rührkessel befindliche Soße ein. Ohne Beheizung des Eintragsrohres kann es nach einer Kühlzeit von ca. 15 Minuten zum Anfrieren von Produkt am Eintragsrohr kommen, so daß sogar der Deckel des Rührkessels sich nicht mehr öffnen läßt, da möglicherweise angefrorener Produktklotz am Rührwerk hängenbleibt Um dieses Anfrieren von Soße am Stickstoffeintragsrohr zu vermeiden, ist eine elektrische Beheizung des Eintragsrohres vorgesehen. Mittels einer Temperaturregelung, die Meßwerte von Thermoelementen im Abgasstrom, in der Soße und am Eintragsrohr auswertet, wird die Beheizung des Eintragsrohres so gesteuert, daß in jedem Betriebszustand Anfrierungen am Eintragsrohr zuverlässig verhindert werden. Bei einer Rührwerksdrehzahl von z.B. 24 min⁻¹ können auf diese Weise hohe Flüssigstickstoffeintragsraten von z.B. 8 kg/min erreicht werden, ohne daß es zu Aneisungen am Eintragsrohr kommt.

## Patentansprüche

1. Verfahren zum Eintragen eines kryogenen Mediums in dispergierbare Stoffe mittels einer Eintragsvorrichtung, die zumindest teilweise mit den dispergierbaren Stoffen in Berührung gebracht wird, **dadurch gekennzeichnet**, daß die mit den dispergierbaren Stoffen in Berührung stehenden Teile der Eintragsvorrichtung zumindest teilweise und zumindest zeitweise beheizt werden.

2. Verfahren nach Anspruch 1, **dadurch gekennzeichnet**, daß die Eintragsvorrichtung zumindest teilweise in die dispergierbaren Stoffe eingetaucht wird und die eingetauchten Teile zumindest teilweise und zumindest zeitweise beheizt werden.

3. Verfahren nach Anspruch 1 oder 2, **dadurch gekennzeichnet**, daß die nicht vom kryogenen Medium durchströmten Teile der Eintragsvorrichtung zumindest teilweise beheizt werden.

4. Verfahren nach einem der Ansprüche 1 bis 3, **dadurch gekennzeichnet**, daß als kryogenes Medium flüssiger Stickstoff verwendet wird.

5. Verfahren nach einem der Ansprüche 1 bis 4, **dadurch gekennzeichnet**, daß die dispergierbaren Stoffe durch Eintrag des kryogenen Mediums auf eine vorbestimmte Temperatur abgekühlt werden.

6. Verfahren nach Anspruch 5, **dadurch gekennzeichnet**, daß die dispergierbaren Stoffe während des Abkühlvorgangs gemischt werden.

7. Verfahren nach einem der Ansprüche 1 bis 6, **dadurch gekennzeichnet**, daß als dispergierbare Stoffe Lebensmittel verwendet werden.

8. Eintragsvorrichtung zum Eintragen eines kryogenen Mediums in dispergierbare Stoffe, wobei die Eintragsvorrichtung zumindest teilweise mit den dispergierbaren Stoffen in Berührung zu bringen ist, **dadurch gekennzeichnet**, daß die mit den dispergierbaren Stoffen in Berührung zu bringenden Teile der Eintragsvorrichtung zumindest teilweise mit einer Heizeinrichtung in Wirkverbindung stehen.

9. Eintragsvorrichtung nach Anspruch 8, **dadurch gekennzeichnet**, daß die nicht vom kryogenen Medium durchströmten Teile der Eintragsvorrichtung zumindest teilweise mit der Heizeinrichtung in Wirkverbindung stehen.

10. Eintragsvorrichtung nach Anspruch 8 oder 9, **dadurch gekennzeichnet**, daß die Eintragsvorrichtung als in die dispergierbaren Stoffe zumindest teilweise eintauchbarer Injektor ausgebildet ist wobei die eintauchbaren und vom kryogenen Medium nicht durchströmten Teile mit einer Beheizung ausgestattet sind.

11. Eintragsvorrichtung nach einem der Ansprüche 8 bis 10, **dadurch gekennzeichnet**, daß zumindest Teile der Eintragsvorrichtung wärmeisoliert ausgebildet sind.
